# EUROPEAN PATENT APPLICATION

(11) **EP 4 365 627 A1**
(43) Date of publication of application: **08.05.2024**
(21) Application number: 22832973.6
(22) Date of filing: 22.06.2022
(51) Int. Cl.: G01S 7/526, G01S 15/931

(54) **OBJECT DETECTION DEVICE**

(30) Priority: 30.06.2021 JP 2021108401
(71) Applicant: AISIN CORPORATION, Kariya-shi, Aichi 448-8650 (JP)
(72) Inventor: SASSA, Koichi, Kariya-shi, Aichi 448-8650 (JP)
(74) Representative: TBK
(86) International application number: PCT/JP2022/024915
(87) International publication number: WO 2023/276825

(57) **Abstract**

An object detection device includes, for example, a transmission unit that transmits a transmission wave, a reception unit that receives a reception wave that is the transmission wave reflected back from an object, a temperature sensor that measures ambient temperature in surroundings, a threshold time-limit setting unit that changes a time limit of time for detecting that a degree of vibration after transmission by the transmission unit falls below a reverberation threshold in accordance with the ambient temperature measured by the temperature sensor, and an object detection unit that detects an object present in the surroundings based on a reflected wave received by the reception unit in accordance with the time limit of the time for detecting that the degree of vibration after transmission set by the threshold time-limit setting unit falls below the reverberation threshold.

## Description

### TECHNICAL FIELD

The present invention relates to an object detection device.

### BACKGROUND ART

A technique for detecting information about an object (for example, the distance to the object) implemented by an ultrasonic sensor by transmitting a transmission wave and receiving a reception wave (reflected wave) that is the transmission wave reflected back from the object has been known.

Patent Literature 1 discloses a technique of switching thresholds for detecting an object in accordance with a beat state of reverberation that appears when foreign matters adhere to the surface of an ultrasonic sensor. This technique lowers the risk of deterioration of object detection performance when sensitivity decreases due to the adhesion of foreign matters.

### CITATIONS LIST

### PATENT LITERATURE

Patent Literature 1: JP 2018-105702 A

### SUMMARY OF INVENTION

### TECHNICAL PROBLEMS

However, the conventional technique fails to cope with deterioration of object detection performance caused by an environmental change (for example, a change in ambient temperature) since the technique is based on a change in the reverberation state caused by adhesion of foreign matters.

The present invention has been made in view of the foregoing, and provides an object detection device that performs appropriate object detection without being affected by ambient temperature.

### SOLUTIONS TO PROBLEMS

In order to solve the problems above and achieve the foregoing, an object detection device according to the present invention includes, for example, a transmission unit configured to transmit a transmission wave, a reception unit configured to receive a reception wave that is the transmission wave reflected back from an object, a temperature sensor configured to measure ambient temperature in surroundings, a threshold time-limit setting unit configured to change a time limit of time for detecting that a degree of vibration after transmission by the transmission unit falls below a reverberation threshold in accordance with the ambient temperature measured by the temperature sensor, and an object detection unit configured to detect an object present in the surroundings based on a reflected wave received by the reception unit in accordance with the time limit of the time for detecting that the degree of vibration after transmission falls below the reverberation threshold, the time limit being set by the threshold time-limit setting unit.

The object detection device can prevent a detection cycle delay in normal detection even when the reverberation time is extended at low temperatures, and can reliably detect that the degree of vibration after transmission falls below the reverberation threshold, thereby enabling appropriate object detection.

The threshold time-limit setting unit of the object detection device determines to change the time limit in a situation in which system operation of object detection does not occur. This configuration can avoid malfunction caused by switching of the time limit when system operation of object detection is occurring.

The threshold time-limit setting unit of the object detection device determines to change the time limit in a situation in which a vehicle is stopped by being shifted to park. This configuration can avoid malfunction caused by switching of the time limit when system operation of object detection is occurring.

The threshold time-limit setting unit of the object detection device determines to change the time limit in a situation in which a vehicle is stopped by being braked. This configuration can avoid malfunction caused by switching of the time limit when system operation of object detection is occurring.

The threshold time-limit setting unit of the object detection device switches the time limit to a second time limit longer than a normal first time limit when determining that the ambient temperature is equal to or lower than a threshold. This configuration can prevent a detection cycle delay in normal detection even when the reverberation time is extended at low temperatures, and can reliably detect that the degree of vibration after transmission falls below the reverberation threshold, thereby enabling appropriate object detection.

### BRIEF DESCRIPTION OF DRAWINGS

FIG. 1 is an exemplary schematic diagram showing an appearance of a vehicle seen from above including an object detection system according to an embodiment.
FIG. 2 is an exemplary schematic block diagram showing a hardware configuration of the object detection system according to the embodiment.
FIG. 3 is an exemplary schematic diagram for describing an outline of a technique used by an object detection device according to the embodiment to detect a distance to an object.
FIG. 4 is a diagram showing an example of an event in which a reverberation time is extended at a low temperature.
FIG. 5 is a functional block diagram showing a functional configuration of the object detection device according to the embodiment.
FIG. 6 is an exemplary flowchart showing a procedure executed by a threshold time-limit setting unit of the object detection device according to the embodiment.
FIG. 7 is a diagram showing an example of switching a time limit at a low temperature.

### DESCRIPTION OF EMBODIMENTS

The following describes embodiments and modifications of the present disclosure with reference to the accompanying drawings. The configurations of the embodiments and the modifications described below, and the functions and effects brought by the configurations are merely examples, and are not limited to the following description.

### <EMBODIMENTS>

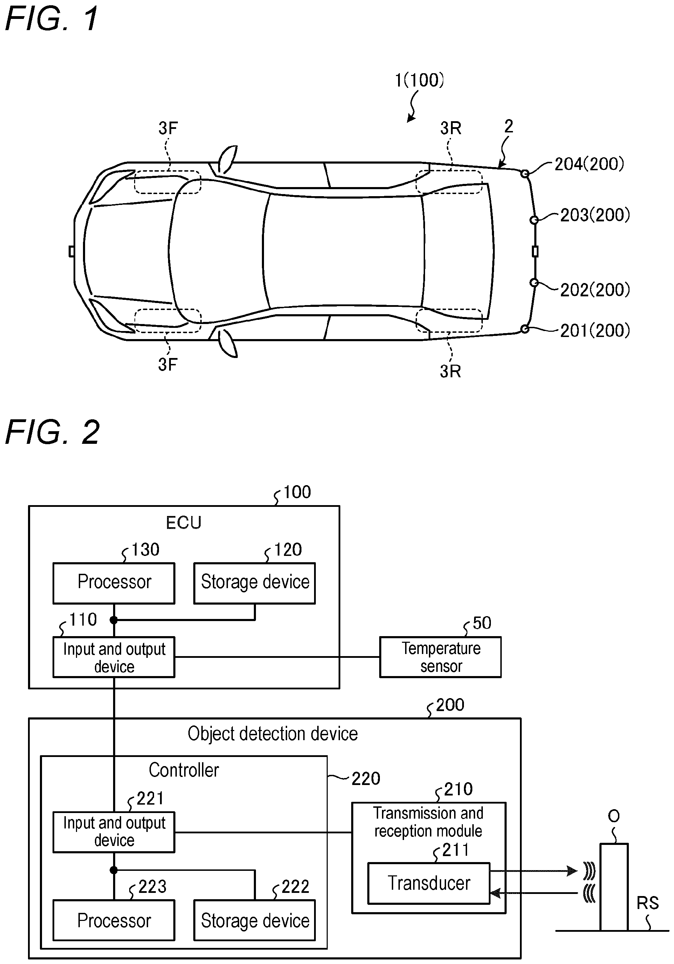

FIG. 1 is an exemplary schematic diagram showing an appearance of a vehicle 1 seen from above including an object detection device according to an embodiment.

As described below, the object detection device according to the embodiment is an in-vehicle sensor system that transmits and receives a sound wave (ultrasonic wave) and acquires a time difference between transmission and reception or the like, to detect information about an object (for example, about an obstacle O illustrated in FIG. 2 to be described later) including a human present in the surroundings.

More specifically, as illustrated in FIG. 1, an object detection system according to the embodiment includes an electronic control unit (ECU) 100 as an in-vehicle control device and object detection devices 201 to 204 as in-vehicle sonars. The ECU 100 is mounted inside the four-wheeled vehicle 1 including a pair of front wheels 3F and a pair of rear wheels 3R, and the object detection devices 201 to 204 are mounted on the exterior of the vehicle 1.

In the example illustrated in FIG. 1, for example, the object detection devices 201 to 204 are installed at different positions on a rear end portion (rear bumper) of a vehicle body 2 as the exterior of the vehicle 1, but the installation positions of the object detection devices 201 to 204 are not limited to the example illustrated in FIG. 1. For example, the object detection devices 201 to 204 may be installed at a front end portion (front bumper) of the vehicle body 2, may be installed at side surface portions of the vehicle body 2, or may be installed at two or more of the rear end portion, the front end portion, and the side surface portions.

In the embodiment, hardware configurations and functions of the object detection devices 201 to 204 are the same. Thus, to simplify the description, the object detection devices 201 to 204 may be collectively referred to as an object detection device 200. In the embodiment, the number of object detection devices 200 is not limited to four as illustrated in FIG. 1.

FIG. 2 is an exemplary schematic block diagram showing a hardware configuration of the object detection system according to the embodiment.

As illustrated in FIG. 2, the ECU 100 has a hardware configuration similar to that of a typical computer. More specifically, the ECU 100 includes an input and output device 110, a storage device 120, and a processor 130.

The input and output device 110 is an interface for implementing transmission and reception of information between the ECU 100 and an external device. For example, in the example illustrated in FIG. 2, devices to communicate with the ECU 100 are the object detection device 200 and a temperature sensor 50. The temperature sensor 50 is mounted to the vehicle 1 to measure the ambient temperature in the surroundings of the vehicle 1.

The storage device 120 includes a main memory such as a read only memory (ROM) and a random access memory (RAM) and/or an auxiliary memory such as a hard disk drive (HDD) and a solid state drive (SSD).

The processor 130 manages various types of processing executed by the ECU 100. The processor 130 includes an arithmetic device such as a central processing unit (CPU), for example. The processor 130 reads and executes a computer program stored in the storage device 120 to implement various functions such as automatic parking, for example.

As illustrated in FIG. 2, the object detection device 200 includes a transmission and reception unit 210 and a controller 220.

The transmission and reception unit 210 includes a transducer 211 including, for example, a piezoelectric element, and the transducer 211 transmits and receives an ultrasonic wave.

More specifically, the transmission and reception unit 210 transmits, as a transmission wave, an ultrasonic wave generated in accordance with the vibration of the transducer 211, and receives, as a reception wave, the vibration of the transducer 211 caused by the ultrasonic wave transmitted as the transmission wave and reflected back from an external object. In the example illustrated in FIG. 2, the obstacle O located on a road surface RS is illustrated as an object that reflects an ultrasonic wave transmitted from the transmission and reception unit 210.

In the example in FIG. 2, the transmission and reception unit 210 is illustrated as a single configuration including a single transducer 211 that performs both transmission of a transmission wave and reception of a reception wave. However, the technology according to the embodiment is, for example, applicable to a configuration implementing transmission and reception separately, such as a configuration including a first transducer for transmitting a transmission wave and a second transducer for receiving a reception wave that are separately provided.

The controller 220 has a hardware configuration similar to that of a typical computer. More specifically, the controller 220 includes an input and output device 221, a storage device 222, and a processor 223.

The input and output device 221 is an interface for implementing transmission and reception of information between the controller 220 and an external device (in the example illustrated in FIG. 1, the ECU 100 and the transmission and reception unit 210).

The storage device 222 includes a main memory such as a ROM and a RAM, and an auxiliary memory such as an HDD or an SSD.

The processor 223 manages various types of processing executed by the controller 220. The processor 223 includes an arithmetic device such as a CPU, for example. The processor 223 implements various functions by reading and executing a computer program stored in the storage device 333.

The object detection device 200 according to the embodiment detects the distance to an object by the technique called Time of Flight (ToF). ToF is a technique of calculating a distance to an object based on a difference between timing at which a transmission wave is transmitted (more specifically, transmission starts) and timing at which a reception wave is received (more specifically, reception starts).

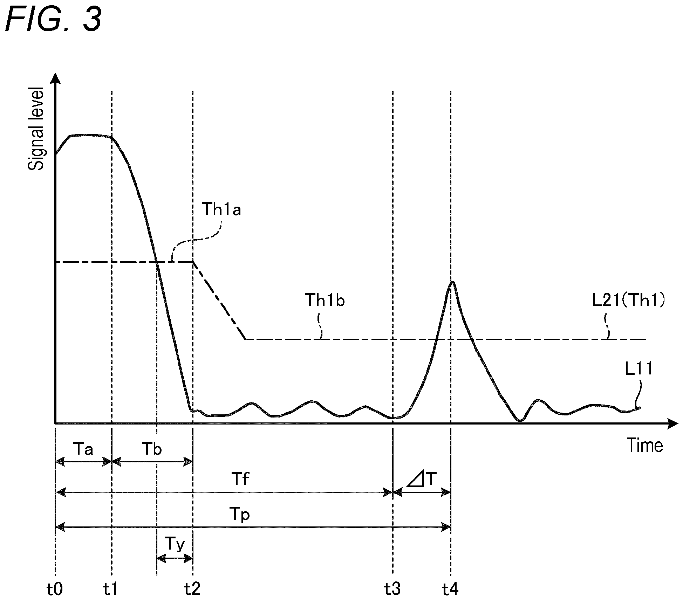

FIG. 3 is an exemplary schematic diagram for describing an outline of the technique used by the object detection device 200 according to the embodiment to detect a distance to an object.

More specifically, FIG. 3 is an exemplary schematic diagram in a form of a graph illustrating a temporal change in a signal level (for example, amplitude) of an ultrasonic wave transmitted and received by the object detection device 200 according to the embodiment. In the graph illustrated in FIG. 3, the horizontal axis corresponds to time, and the vertical axis corresponds to the signal level of a signal transmitted and received by the object detection device 200 via the transmission and reception unit 210 (transducer 211).

In the graph illustrated in FIG. 3, a solid line L11 represents an example of an envelope representing a temporal change in the signal level of the signal transmitted and received by the object detection device 200, that is, the degree of vibration of the transducer 211. The solid line L11 shows that the transducer 211 is driven from timing t0 for a time Ta and vibrates, and finishes transmission of a transmission wave at timing t1 and the vibration of the transducer 211 continues due to inertia while being attenuated for a time Tb to timing t2. In this regard, in the graph illustrated in FIG. 3, the time Tb corresponds to what is called a reverberation time.

As indicated by the solid line L11, the degree of vibration of the transducer 211 reaches a peak exceeding (or equal to or greater than) a predetermined threshold Th1 represented by an alternate long and short dash line L21 at timing t4 after a time Tp from the timing t0 at which transmission of the transmission wave is started. The threshold Th1 is a value set in advance to specify whether the vibration of the transducer 211 is caused by reception of a reception wave (reflected wave) that is the transmission wave reflected back from an object that is a detection target (for example, the obstacle O illustrated in FIG. 2) or is caused by reception of a reception wave (reflected wave) that is the transmission wave reflected back from an object that is not a detection target (for example, the road surface RS illustrated in FIG. 2).

The threshold Th1 includes a reverberation threshold Th1a for use in end determination of the reverberation time, in other words, for use in start determination for acquiring a reception wave (reflected wave) that is the transmission wave reflected back, and includes a reflected wave threshold Th1b for use in object detection determination for detecting an object by the reception wave (reflected wave) that is the transmission wave reflected back.

Specifically, as illustrated in FIG. 3, the controller 220 determines that the reverberation time ends when a predetermined delay time Ty has passed after the degree of vibration after transmission falls below the reverberation threshold Thia (timing t2), and starts reading a reception wave (reflected wave) that is the transmission wave reflected back.

In the present embodiment, a time limit (the duration of the reverberation threshold Thia when reverberation detection is not performed) of the time (Ta + Tb) for detecting that the degree of vibration after transmission falls below the reverberation threshold Thia is determined in advance.

When determining that the reverberation time has ended, the controller 220 proceeds to start reading the reception wave (reflected wave) that is the transmission wave reflected back. When the controller 220 has started reading the reception wave (reflected wave) that is the transmission wave reflected back, the controller 220 switches the threshold Th1 from the reverberation threshold Th1a to the reflected wave threshold Th1b, and performs object detection using the reflected wave threshold Th1b. In the present embodiment, in switching from the reverberation threshold Thia to the reflected wave threshold Th1b, the threshold Th1 is gradually decreased from the reverberation threshold Thia to the reflected wave threshold Th1b and remains at a constant value at the reflected wave threshold Th1b. At or after the timing t2, the controller 220 compares the degree of vibration of the reflected wave with the reflected wave threshold Th1b, and if the degree of vibration of the reflected wave exceeds the reflected wave threshold Th1b, the controller 220 determines that an object is detected.

In this case, vibration having a peak exceeding (or equal to or greater than) the threshold Th1 (reflected wave threshold Th1b) can be regarded as being caused by reception of the reception wave (reflected wave) that is the transmission wave reflected back from an object that is a detection target. Vibration having a peak equal to or lower than (or under) the threshold Th1 (reflected wave threshold Th1b) can be regarded as being caused by reception of the reception wave (reflected wave) that is the transmission wave reflected back from an object that is not a detection target.

Therefore, the solid line L11 shows that the vibration of the transducer 211 at timing t4 is caused by reception of a reception wave (reflected wave) that is the transmission wave reflected back from an object that is a detection target.

As indicated by the solid line L11, the vibration of the transducer 211 is attenuated after the timing t4. This means that the timing t4 corresponds to the completion timing of the reception of the reception wave (reflected wave) that is the transmission wave reflected back from an object that is a detection target, in other words, corresponds to the timing at which the last transmission wave transmitted at the timing t1 returns as the reception wave (reflected wave).

In the solid line L11, timing t3 as a starting point to the peak at the timing t4 corresponds to the start timing of the reception of the reception wave (reflected wave) that is the transmission wave reflected back from an object that is a detection target, in other words, corresponds to the timing at which the first transmission wave transmitted at the timing t0 returns as the reception wave (reflected wave). Therefore, in the solid line L11, a time ΔT between the timing t3 and the timing t4 is equal to the time Ta that is the transmission time of the transmission wave.

Based on the above, in order to obtain the distance to an object that is a detection target by using ToF, it is necessary to obtain a time Tf between the timing t0 at which transmission of the transmission wave starts and the timing t3 at which reception of the reception wave starts. The time Tf can be obtained by subtracting the time ΔT equal to the time Ta that is the transmission time of the transmission wave from a time Tp that is a difference between the timing t0 and the timing t4 at which the signal level of the reception wave reaches a peak exceeding the threshold Th1 (reflected wave threshold Th1b).

The timing t0 at which transmission of the transmission wave starts can be easily specified as timing at which the object detection device 200 starts operation, and the time Ta that is the transmission time of the transmission wave is determined in advance by, for example, a setting. To obtain the distance to an object that is a detection target by using ToF, it is eventually important to specify the timing t4 at which the signal level of the reception wave reaches a peak exceeding the threshold Th1 (reflected wave threshold Th1b). To specify the timing t4, it is important to accurately detect a correspondence between a transmission wave and a reception wave (reflected wave) that is the transmission wave reflected back from an object that is a detection target.

The transmission and reception unit 210 that transmits and receives ultrasonic waves has thermal properties. Thus, it is known that the reverberation time of the transmission and reception unit 210 is extended at low temperatures than at normal temperatures. When the reverberation time is extended at low temperatures, the following problems occur.

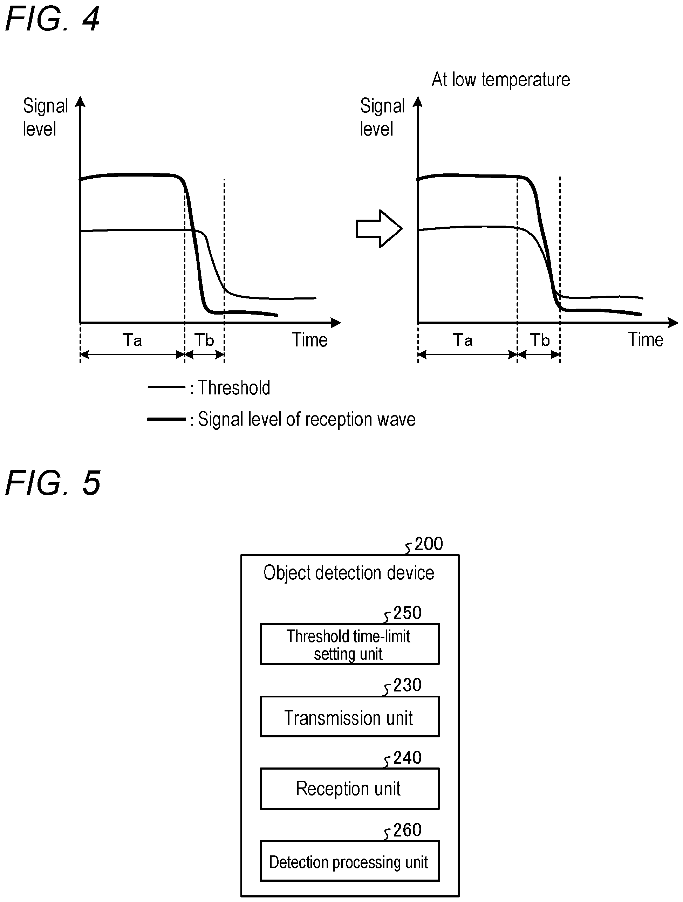

FIG. 4 is a diagram showing an example of an event in which the reverberation time is extended at a low temperature. As illustrated in FIG. 4, when the reverberation time is extended at a low temperature, the reverberation time exceeds the time limit of the time (Ta + Tb) for detecting that the degree of vibration after transmission falls below the reverberation threshold Th1a. This may cause a detection cycle delay in normal detection in which the object detection device 200 may fail to detect that the degree of vibration after transmission falls below the reverberation threshold Thia or the timing for detecting that the degree of vibration after transmission falls below the reverberation threshold Thia may be delayed. In this case, the object detection device 200 fails to appropriately determine the end of reverberation time, thereby failing to detect an object appropriately.

In the present embodiment, the object detection device 200 is configured in the following manner to reliably detect that the degree of vibration after transmission falls below the reverberation threshold Thia even when the reverberation time is extended at low temperatures. This configuration enables appropriate object detection.

FIG. 5 is a functional block diagram showing a functional configuration of the object detection device 200 according to the embodiment. As illustrated in FIG. 5, the object detection device 200 includes a transmission unit 230, a reception unit 240, a threshold time-limit setting unit 250, and a detection processing unit 260.

The transmission unit 230 transmits a transmission wave to the outside by vibrating the transducer 211 at a certain transmission interval. The transmission interval is a time interval between transmission of a transmission wave and transmission of a next transmission wave. The transmission unit 230 includes, for example, a circuit that generates a carrier wave, a circuit that generates a pulse signal corresponding to identification information to be given to the carrier wave, a multiplier that modulates the carrier wave according to the pulse signal, and an amplifier that amplifies a transmission signal output from the multiplier.

The reception unit 240 receives a reception wave that is a reflected wave of the transmission wave transmitted from the transmission unit 230 for a certain measurement time after transmission of the transmission wave. The measurement time is a standby time set for receiving a reception wave that is a reflected wave of the transmission wave after transmission of the transmission wave.

The threshold time-limit setting unit 250 variably sets a time limit of the time (Ta + Tb) for detecting that the degree of vibration after transmission falls below the reverberation threshold Th1a based on the ambient temperature in the surroundings of the vehicle 1 measured by the temperature sensor 50. More specifically, when the ambient temperature in the surroundings of the vehicle 1 is a normal temperature, the threshold time-limit setting unit 250 sets the time limit to a first time limit. When the ambient temperature in the surroundings of the vehicle 1 is low, the threshold time-limit setting unit 250 sets the time limit to a second time limit longer than the first time limit (first time limit < second time limit).

The threshold time-limit setting unit 250 may variably set the delay time Ty based on the ambient temperature in the surroundings of the vehicle 1 measured by the temperature sensor 50. When the ambient temperature in the surroundings of the vehicle 1 is low, it is preferable to start reading the reflected wave earlier, since the time limit of the time (Ta + Tb) for detecting that the degree of vibration after transmission falls below the reverberation threshold Thia is extended. In this regard, the threshold time-limit setting unit 250 may set a shorter delay time Ty when the ambient temperature in the surroundings of the vehicle 1 is low. This configuration allows the object detection device 200 to ensure the detection performance for detecting a short-distance object while avoiding erroneous detection of an object due to the ambient temperature in the surroundings of the vehicle 1.

The detection processing unit 260 detects the distance to the object by ToF based on the reflected wave received by the reception unit 240 in accordance with the time limit of the time (Ta + Tb) for detecting that the degree of vibration after transmission falls below the reverberation threshold Thia set by the threshold time-limit setting unit 250.

In the embodiment, at least a part of the configuration illustrated in FIG. 5 is implemented by hardware and software working together, more specifically, implemented by the processor 223 of the object detection device 200 reading a computer program from the storage device 222 and executing it. In the embodiment, at least a part of the configuration illustrated in FIG. 5 may be implemented by dedicated hardware (circuitry).

In the embodiment, the configuration illustrated in FIG. 5 may operate under the control of the controller 220 of the object detection device 200, or may operate under the control of the external ECU 100.

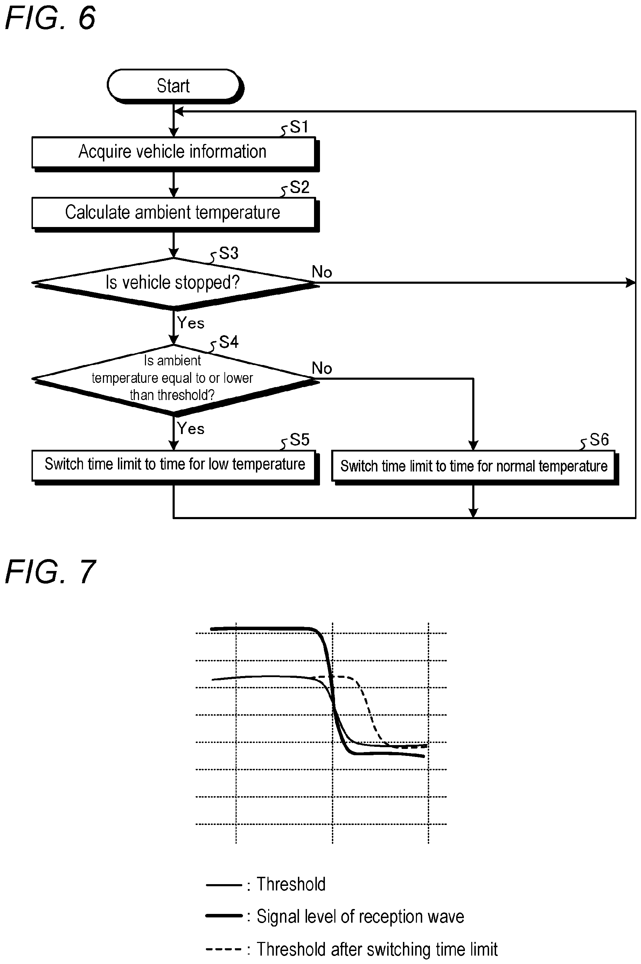

The threshold time-limit setting unit 250 of the object detection device 200 according to the embodiment switches the time limit of the time (Ta + Tb) for detecting that the degree of vibration after transmission falls below the reverberation threshold Th1a by executing the procedure illustrated in FIG. 6 in accordance with the configuration described above.

FIG. 6 is an exemplary flowchart showing a procedure executed by the threshold time-limit setting unit 250 of the object detection device 200 according to the embodiment.

As illustrated in FIG. 6, in the embodiment, the threshold time-limit setting unit 250 of the object detection device 200 acquires vehicle information on the vehicle 1 from the ECU 100 (step S1). The vehicle information acquired from the ECU 100 is, for example, shift information and vehicle speed information.

Next, the threshold time-limit setting unit 250 of the object detection device 200 acquires the ambient temperature in the surroundings of the vehicle 1 measured by the temperature sensor 50 (step S2).

The threshold time-limit setting unit 250 of the object detection device 200 then determines whether the vehicle 1 is stopped based on the vehicle information on the vehicle 1 (step S3). The reason for determining whether the vehicle 1 is stopped is to switch the time limit of the time (Ta + Tb) for detecting that the degree of vibration after transmission falls below the reverberation threshold Thia in a situation in which system operation of object detection does not occur. The situation in which system operation of object detection does not occur includes, for example, a situation in which the vehicle 1 is stopped by being shifted to park (P), and a situation in which the vehicle 1 is stopped by being braked. The situation in which the vehicle 1 is stopped by being shifted to park (P) can be determined from, for example, shift information that is the vehicle information acquired from the ECU 100. The situation in which the vehicle 1 is stopped by being braked can be determined from, for example, vehicle speed information that is the vehicle information acquired from the ECU 100. This configuration can avoid malfunction caused by switching of the time limit when system operation of object detection is occurring.

When determining that the vehicle 1 is not stopped (No in step S3), the threshold time-limit setting unit 250 of the object detection device 200 ends the processing since system operation of object detection is occurring.

When determining that the vehicle 1 is not stopped (Yes in step S3), the threshold time-limit setting unit 250 of the object detection device 200 determines whether the ambient temperature is equal to or lower than a threshold (step S4). The threshold of the ambient temperature is, for example, zero degrees.

When determining that the ambient temperature is equal to or lower than the threshold (zero degrees) (Yes in step S4), the threshold time-limit setting unit 250 of the object detection device 200 switches the time limit of the time (Ta + Tb) for detecting that the degree of vibration after transmission falls below the reverberation threshold Thia to the second time limit for low temperatures (step S5), and ends the processing.

FIG. 7 is a diagram showing an example of switching the time limit at a low temperature. As illustrated in FIG. 7, when determining that the ambient temperature is equal to or lower than the threshold (zero degrees), the threshold time-limit setting unit 250 of the object detection device 200 switches the time limit of the time (Ta + Tb) for detecting that the degree of vibration after transmission falls below the reverberation threshold Th1a to the second time limit longer than the first time limit for normal temperatures. This configuration allows the object detection device 200 to reliably detect that the degree of vibration after transmission falls below the reverberation threshold Thia even when the reverberation time is extended at low temperatures, and enables appropriate object detection.

When determining that the ambient temperature is not equal to or lower than the threshold (zero degrees) (No in step S4), the threshold time-limit setting unit 250 of the object detection device 200 switches the time limit of the time (Ta + Tb) for detecting that the degree of vibration after transmission falls below the reverberation threshold Th1a to the first time limit for normal temperatures (step S6), and ends the processing.

As described above, the object detection device 200 according to the embodiment includes the threshold time-limit setting unit 250. When the ambient temperature in the surroundings of the vehicle 1 measured by the temperature sensor 50 is low, the threshold time-limit setting unit 250 sets a longer time limit of the time (Ta + Tb) for detecting that the degree of vibration after transmission falls below the reverberation threshold Thia than at normal temperatures. This configuration can prevent a detection cycle delay in normal detection even when the reverberation time is extended at low temperatures, and allows the object detection device 200 to reliably detect that the degree of vibration after transmission falls below the reverberation threshold Th1a, thereby enabling appropriate object detection.

At normal temperatures, the object detection device 200 according to the embodiment can set a shorter time limit of the time (Ta + Tb) for detecting that the degree of vibration after transmission falls below the reverberation threshold Th1a. This configuration can improve object detection performance at a short distance at normal temperatures.

### <MODIFICATIONS>

In the embodiment above, the technology according to the present disclosure is applied to a configuration for detecting information about an object by transmitting and receiving an ultrasonic wave, but the technology according to the present disclosure is applicable to a configuration for detecting information about an object by transmitting and receiving other waves such as a sound wave, a millimeter wave, and an electromagnetic wave other than the ultrasonic wave.

In the embodiment above, for example, the technology according to the present disclosure is applied to the object detection device that detects the distance to an object, but the technology according to the present disclosure is applicable to an object detection device that only detects presence of an object as information about the object.

In the embodiment above, the time limit of the time (Ta + Tb) for detecting that the degree of vibration after transmission falls below the reverberation threshold Thia is switched to the second time limit longer than the normal first time limit based on the ambient temperature. However, the object detection device can have more setting variations in changing the time limit in accordance with the ambient temperature.

Although the embodiments and modifications of the present disclosure have been described, the embodiments and modifications described above are merely examples, and are not intended to limit the scope of the invention. The novel embodiments and modifications described above can be implemented in various forms, and various omissions, substitutions, and changes can be made without departing from the gist of the invention. The embodiments and modifications described above are included in the scope and gist of the invention, and are included in the invention described in the claims and the equivalents thereof.

### REFERENCE SIGNS LIST

1: Vehicle, 50: Temperature sensor, 200: Object detection device, 230: Transmission unit, 240: Reception unit, 250: Threshold time-limit setting unit, and 260: Object detection unit

## Claims

1. An object detection device comprising:
a transmission unit configured to transmit a transmission wave;
a reception unit configured to receive a reception wave that is the transmission wave reflected back from an object;
a temperature sensor configured to measure ambient temperature in surroundings;
a threshold time-limit setting unit configured to change a time limit of time for detecting that a degree of vibration after transmission by the transmission unit falls below a reverberation threshold in accordance with the ambient temperature measured by the temperature sensor; and
an object detection unit configured to detect an object present in the surroundings based on a reflected wave received by the reception unit in accordance with the time limit of the time for detecting that the degree of vibration after transmission falls below the reverberation threshold, the time limit being set by the threshold time-limit setting unit.

2. The object detection device according to claim 1, wherein the threshold time-limit setting unit determines to change the time limit in a situation in which system operation of object detection does not occur.

3. The object detection device according to claim 2, wherein the threshold time-limit setting unit determines to change the time limit in a situation in which a vehicle is stopped by being shifted to park.

4. The object detection device according to claim 2, wherein the threshold time-limit setting unit determines to change the time limit in a situation in which a vehicle is stopped by being braked.

5. The object detection device according to claim 1, wherein the threshold time-limit setting unit switches the time limit to a second time limit longer than a normal first time limit when determining that the ambient temperature is equal to or lower than a threshold.
